# EUROPEAN PATENT APPLICATION

(11) **EP 2 894 813 A1**
(43) Date of publication of application: **15.07.2015**
(21) Application number: 14000051.4
(22) Date of filing: 08.01.2014
(51) Int. Cl.: H04L 12/24

(54) **Technique for creating a knowledge base for alarm management in a communications network**

(71) Applicant: Telefonaktiebolaget L M Ericsson (publ), 164 83 Stockholm (SE)
(72) Inventor: Hévizi, László, 2081 Piliscsaba (HU); Fu, Jing, 171 70 Solna (SE); Magyar, Gábor, 2330 Dunaharaszti (HU); Rácz, András, 1148 Budapest (HU)
(74) Representative: Röthinger, Rainer

(57) **Abstract**

A technique for creating a knowledge base for alarm management in a communications network is disclosed. In a method aspect, the method comprises the steps of defining a set of alarm properties observable for at least one managed element of the communications network; grouping incoming alarms into at least one alarm group based on heuristics; correlating the set of alarm properties with the at least one alarm group to thus generate at least one correlated alarm record; and constructing the knowledge base on the basis of the at least one correlated alarm record.

## Description

### Technical Field

The present disclosure generally relates to creating a knowledge base for alarm management in a communications network. The techniques of the present disclosure may be embodied in a method, an apparatus and/or a data structure.

### Background

Handling of alarms, which are issued by network elements, constitutes a major part of occupation in Network Operation Centers (NOCs), where hundreds of alarms need to be handled each day. Today, a large part of the alarm processing is done by manual execution, which is slow, difficult to scale and cost-inefficient. In addition, due to this way of operation, lessons learnt from earlier alarm resolution cases remains unwritten expert knowledge of the NOC staff without much systematic categorization, if any, for possible future use.

In current telecommunication systems, network nodes are equipped with basic fault management functionality, which involves the generation of alarms when malfunctioning is detected in the node. There exists a variety of alarms depending on the type of fault, e.g., device, hardware fault, software fault, protocol error, environmental problems, etc.

When a failure occurs in a network entity in a telecommunication system, the services or part of the services provided by the concerned entity may degrade or may become blocked completely. Then other components, being either in the malfunctioning device or in another network node and relying on the services of the failed element will exhibit failure symptoms and may start generating alarms themselves. Thus, one single failure and alarm may propagate throughout a large part of the system.

The alarms are collected from the network elements e.g. by an Operation and Maintenance (OAM) system and may be made accessible for the network operator. The network operator then needs to analyze each reported alarm to determine what actions are required to eliminate the fault having caused the alarm. During this analysis, the operator may need to collect further information about the case from the network, e.g., performance statistics. It may also be necessary to check if there is any relationship with and/or dependency from other alarms to ultimately discern the root cause of the alarm and the corresponding appropriate corrective actions.

Such a detailed troubleshooting of the case relies, to a large extent, on the (most often unwritten) expert knowledge and experience of the NOC staff. When aiming at an automation of such a troubleshooting step, there is a need for machine-based analyses techniques that are able to learn knowledge from previous failure cases and to organize and use this knowledge in a human-like fashion.

Hitherto, alarm management still relates to the correlation and grouping of alarms, where the primary objective is discern the alarms that belong together and have most probably been triggered by the same root cause.

### Problems with existing solutions not hitherto realized

Current solutions focusing on the correlation and grouping of alarms only provide a solution to one part of the problem, that is, to associate different alarms with each other based on some a-priori knowledge and algorithm.

However, these techniques are static, i.e., they perform the grouping according to pre-defined rules and they are not maintaining any additional information or property about alarms. Due to this, those techniques are unable to automatically extract new knowledge from previous cases, adapt to changing alarm properties and continuously update the alarm information, e.g., learn new alarm dependency rules or typical properties of certain alarms.

### Summary

Accordingly, there is a need for an implementation of a scheme that avoids one or more of the problems discussed above, or other related problems.

In a first aspect, there is provided a method for creating a knowledge base for alarm management in a communications network, comprising the steps of defining a set of alarm properties observable for at least one managed element of the communications network; grouping incoming alarms into at least one alarm group based on heuristics; correlating the set of alarm properties with the at least one alarm group to thus generate at least one correlated alarm record; and constructing the knowledge base on the basis of the at least one correlated alarm record. In this way, automatic identification of relevant alarm properties is enabled, which can be used to assist and speed up the processing of alarms in NOCs. There is no need for human based "training" of the system, in particular, no expert has to populate the knowledge base manually. Rather, the knowledge base is automatically built and updated based on the actual incoming alarms.

In a first refinement of the first aspect, the heuristics in the grouping step may comprise at least one of sampling incoming alarms, each of which has an alarm raise time point, into the at least one alarm group based on an elapsed time from the respective alarm raise time points; sampling incoming alarms, each of which has an alarm clear time point, into the at least one alarm group based on an elapsed time from the respective alarm clear time points; sampling incoming alarms based on alarm types; sampling incoming alarms based on a-priori knowledge of the communications network and relations of the managed element; and sampling incoming alarms based on a-priori knowledge of relations of the incoming alarms. In addition or alternatively, the grouping step may further comprise classifying the at least one alarm group into one group type.

In a second refinement of the first aspect, a-priori knowledge may comprise learnt dependences in the topology of the communications network. If so, the learnt dependences may be based on a physical link hierarchy between the managed elements and on information routes of communication traffic. In this way, without being mandatory, a-priori knowledge may be used to augment construction of the knowledge base.

In a third refinement of the first aspect, the set of alarm properties may comprise basic alarm properties and extended alarm properties. If so, the basic alarm properties may comprise at least one of the following properties for each incoming alarm: time of day and date; alarm types in the alarm group; severity of the alarm types; alarm group duration; one of nodes and cells having raised the alarm; and number of actual other alarms existing in an alarm subsystem during the particular alarm group. Moreover, the extended alarm properties may comprise at least one of the following: immediate performance impact on at least one user due to the alarm group; a change in a Key Performance Indicator, KPI, value due to the alarm group; a deviation of a current KPI value from an expected KPI value due to the alarm group; a change in service performance due to the alarm group; missing measurements from the managed elements due to the alarm group; and alarm resolution information for the alarm group. In the latter case, in the case of change in service performance due to the alarm group, there may be the steps of detecting an alarm property based on detecting the change in service performance; identifying at least one service at the managed element having raised the alarm; and recording any change in the observed quality. Accordingly, the thus obtained extended alarm group records allow for broadening the scope of an alarm: no longer needs the alarm to be tied to a physical failure (which may propagate through the network), but may also pertain to a more global insufficient network behaviour.

In a fourth refinement of the first aspect, the correlating step may further comprise calculating and assigning alarm properties to the alarm group derived from the alarm properties of the individual alarms comprising the alarm group. In addition or alternatively, the constructing step may further comprise aggregating the at least one correlated alarm record per alarm group type. In the latter case, the aggregating step may be based on one of the following: in case of the property in question exhibiting nominal values, counting occurrences and frequency for each possible value; in case of the property in question being a textual field, continuously updating a list of keywords with their respective frequency; or in case of the property in question exhibiting numeric values, continuously updating at least one of an average, a standard deviation and a corresponding histogram. In that case, the scope of an alarm may further be broadened, since not only numerical values may be processed, but certain fuzziness is enabled to process also non-numerical alarm types or groups.

In a fifth refinement of the first aspect, the knowledge base may have N rows for N alarm group types and at least one column per each of M properties resulting in at least M*N fields, and wherein the constructing step may further comprise initializing all fields to 0; calculating, for all M properties, three correlation measures for the n-th alarm group before, during and after the occurrence of an incoming alarm belonging to the n-th alarm group, and populating the knowledge base so that a field of the knowledge base is assigned a non-zero value if and only if the three correlation measures of the m-th alarm group and the n-th property deviate, with both statistical certainty and by a statistically significant amount, from one another. In this way, it is ascertained that the knowledge base is kept lean in terms of avoiding alarm type/property pairings having only minor influence on the relevant network behaviour.

In a sixth refinement of the first aspect, the method may further comprise discarding the at least one correlated alarm record after completion of the constructing step. In this way, no longer need records to be maintained, but only the statistically essential values are populated in the knowledge base.

In a second aspect, there is provided a computer program product comprising program code portions for performing the method of any one of the preceding claims when the computer program product is executed on one or more computing devices. The computer program product is preferably stored on a computer readable recording medium.

In a third aspect, there is provided an apparatus for creating a knowledge base for alarm management in a communications network, the apparatus comprising a processor configured to define a set of alarm properties observable for at least one managed element of the communications network; group incoming alarms into at least one alarm group incoming alarms; correlate the set of alarm properties with the at least one alarm group to thus generate at least one correlated alarm record; and construct the knowledge base on the basis of the at least one correlated alarm record.

In a fourth aspect, there is provided a data structure of a knowledge base for alarm management in a communications network, the data structure comprising N rows for N alarm group types grouped from incoming alarms; and at least one column per each of M properties observable for at least one managed element of the communications network, which results in at least M*N fields, wherein all fields are initialized to 0; a field [m,n] of the data structure is assigned a non-zero value if and only if three correlation measures of an m-th alarm group and an n-th property deviate, with both statistical certainty and by a statistically significant amount, from one another, wherein, for all M properties, the three correlation measures for the n-th alarm group before, during and after occurrence of an incoming alarm belonging to the n-th alarm group have been calculated.

Still further, it is to be noted that the method aspects may also be embodied on the apparatus of the third aspect comprising at least one processor and/or appropriate means for carrying out any one of the method steps.

### Brief Description of the Drawings

The embodiments of the technique presented herein are described herein below with reference to the accompanying drawings, in which:
- Fig. 1: shows the principle of a knowledge base and of information sources of the knowledge base;
- Fig. 2: shows the operational principle of the knowledge base in terms of building, updating and using the knowledge base.
- Fig. 3A: shows an example topology of managed elements in a communications network;
- Fig. 3B: shows components comprised in an exemplary device embodiment realized in the form of an apparatus (which may reside e.g. in any one the managed elements);
- Fig. 4: shows a method embodiment which also reflects the interaction between the components of the apparatus embodiment;
- Fig. 4A: shows a first example for grouping of alarms;
- Fig. 5A: shows a first example of a data structure embodiment;
- Fig. 5B: shows a second example of the data structure embodiment; and
- Fig. 5C: shows a third example of the data structure embodiment.

### Detailed Description

In the following description, for purposes of explanation and not limitation, specific details are set forth (such as particular signalling steps) in order to provide a thorough understanding of the technique presented herein. It will be apparent to one skilled in the art that the present technique may be practiced in other embodiments that depart from these specific details. For example, the embodiments will primarily be described in the context of a communications network; however, this does not rule out the use of the present technique in connection with (future) technologies consistent with the event evaluation, be it a wirebound communications network or a wireless communications network.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a field programmable gate array (FPGA) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

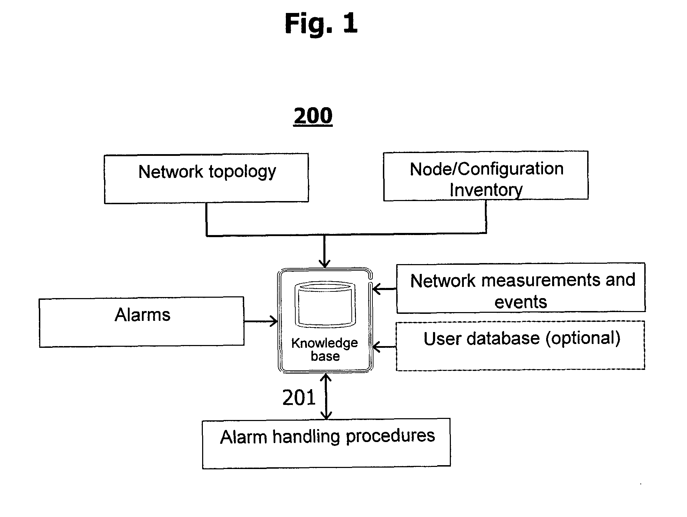

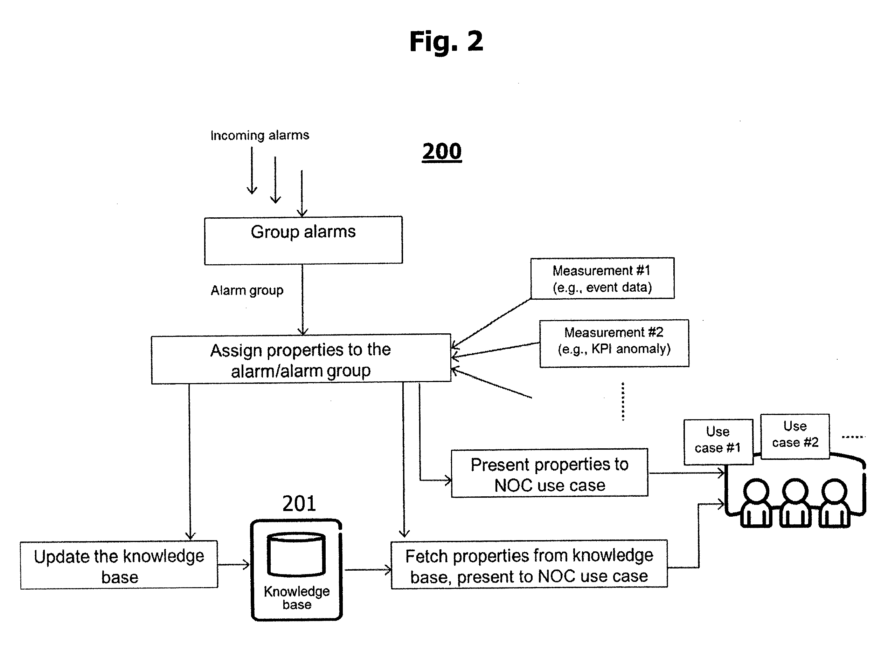

Fig. 1 shows the principle of a knowledge base 201 and of information sources of the knowledge base 201 in a communications network 200. Fig. 2 shows the operational principle of the knowledge base 201 in terms of building, updating and using the knowledge base 201. The main sources of information that the alarm knowledge base may be built on are summarized in Fig. 1. More detailed description how these information sources are used follows hereinbelow.

Without loss of generality, in the proposed solution, a set of alarm properties is defined that are observed for each alarm and alarm group case-by-case at the time the given alarm(s) occurred. In order to obtain the relevant properties, data may be collected from other data sources, such as network measurements, events, counters, service performances, and that data may be correlated with the particular alarm in an automated way. In this way, an alarm or a group of alarms that occur simultaneously is enriched by this additional valuable set of instant information. Then, the statistical knowledge base 201 of the observed alarm properties is continuously built and updated. Thus, not only the instant information that enriches the current alarm is known, but the typical observations of these properties in the past are also visible from the built alarm knowledge base 201. In addition, in-depth statistics also become available on the relative occurrences of different alarms and alarm groups: what alarms occur more frequently together, what alarm can imply other alarm(s), etc. Finally, use case specific procedures are specified, namely, how to utilize the learned alarm properties for the processing of incoming alarms, such as alarm prioritization, alarm prediction, trouble ticket generation or alarm resolution.

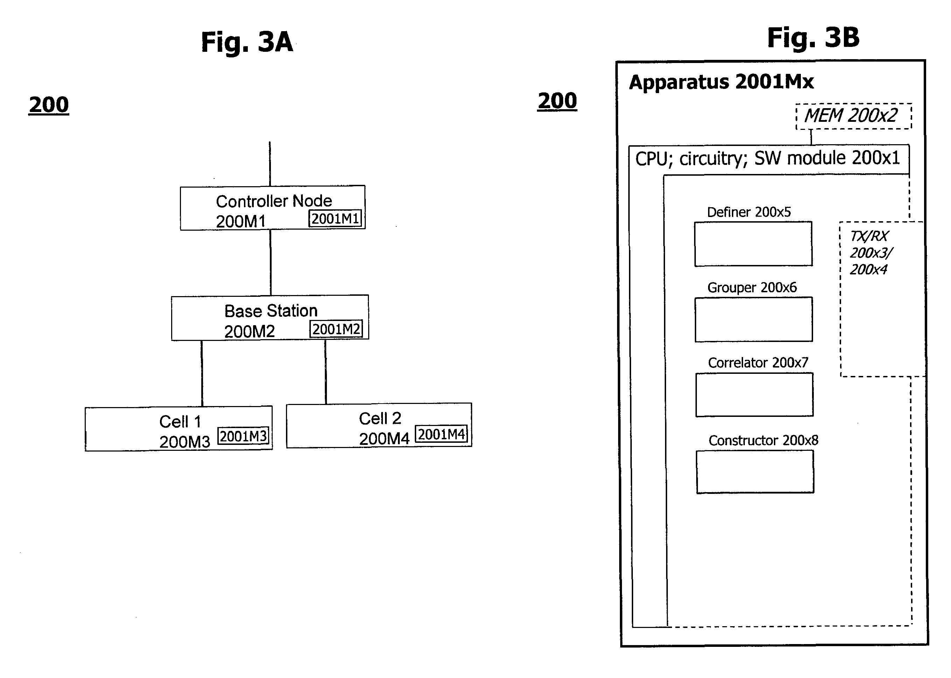

Fig. 3A shows an example topology of managed elements in a communications network. Such managed elements may e.g. be a controller node 200M1, a base station 200M2, a cell 1 200M2 or another cell 2 200M4. In particular, as shown in Fig. 3A, an apparatus 2001Mx (i.e., 2001M1, 2001M2, 2001M3 or 2001M4) pertaining to the device embodiment may reside in any of the managed elements. However, this does not preclude that the apparatus may also be situated in a superior element such as a network controller (not shown).

As is shown in Fig. 3A, there may be a generic relationship of a (mobile) network topology. The controller node 200M1, the base station 200M2 and the cells 200M3, 200M4 are typical managed elements of a network, and the alarms may be associated with these elements.

The alarms may typically indicate the subsystem, which triggered the alarm. An alarm on the transport link may cause further alarms on the base station 200M2 and cells 200M3, 200M4, and an alarm on the base station 200M2 may cause alarms on its cells 200M3, 200M4. Therefore, alarms which are known to impact managed elements below in the hierarchical topology, may be projected all the way down to the affected managed elements. Alternatively, cell alarms could be projected up in the node hierarchy to the base station, so that if a cell failure triggers a base station alarm, then a causal relationship between the cell and base station alarms may be still be observed.

Fig. 3B shows components comprised in an exemplary device embodiment realized in the form of the apparatus 2001Ms. As shown in Fig. 3B, the apparatus 2001Mx comprises a core functionality (e.g., one or more of a Central Processing Unit (CPU), dedicated circuitry and/or a software module) 200x1, an optional memory (and/or database) 200x2, an optional transmitter 200x3 and an optional receiver 200x4. Moreover, the apparatus 2001Mx comprises a definer 200x5, a grouper 200x6, a correlator 200x7 and a constructor 200x8.

In the following paragraphs, assume that x = 1,...,4 (in case of the apparatus 2001Mx residing in any one of the managed elements 200M1, 200M2, 200M3 or 200M4). As partly indicated by the dashed extensions of the functional block of the CPU 200x1, the definer 200x5, the grouper 200x6, the correlator 200x7 and the constructor 200x8 (of the apparatus 2001Mx) as well as the memory 200x1, the transmitter 200x3 and the receiver 200x4 may at least partially be functionalities running on the CPU 200x2, or may alternatively be separate functional entities or means controlled by the CPU 200x1 and supplying the same with information. The transmitter and receiver components 200x3, 200x4 may be realized to comprise suitable interfaces and/or suitable signal generation and evaluation functions.

The CPU 200x1 may be configured, for example, using software residing in the memories 200x2, to process various data inputs and to control the functions of the memories 200x2, the transmitter 200x3 and the receiver 200x3 (as well as the definer 200x5, the grouper 200x6, the correlator 200x7 and the constructor 200x8 (of the apparatus 2001Mx)). The memory 200x2 may serve for storing program code for carrying out the methods according to the aspects disclosed herein, when executed by the CPU 200x1.

It is to be noted that the transmitter 200x3 and the receiver 200x4 may be provided as an integral transceiver, as is indicated in Fig. 3B. It is further to be noted that the transmitters/receivers 200x3, 200x4 may be implemented as physical transmitters/receivers for transceiving via an air interface or a wired connection, as routing/forwarding entities/interfaces between network elements, as functionalities for writing/reading information into/from a given memory area or as any suitable combination of the above. At least one of the definer 200x5, the grouper 200x6, the correlator 200x7 and the constructor 200x8 (of the apparatus 2001Mx), or the respective functionalities, may also be implemented as a chipset, module or subassembly.

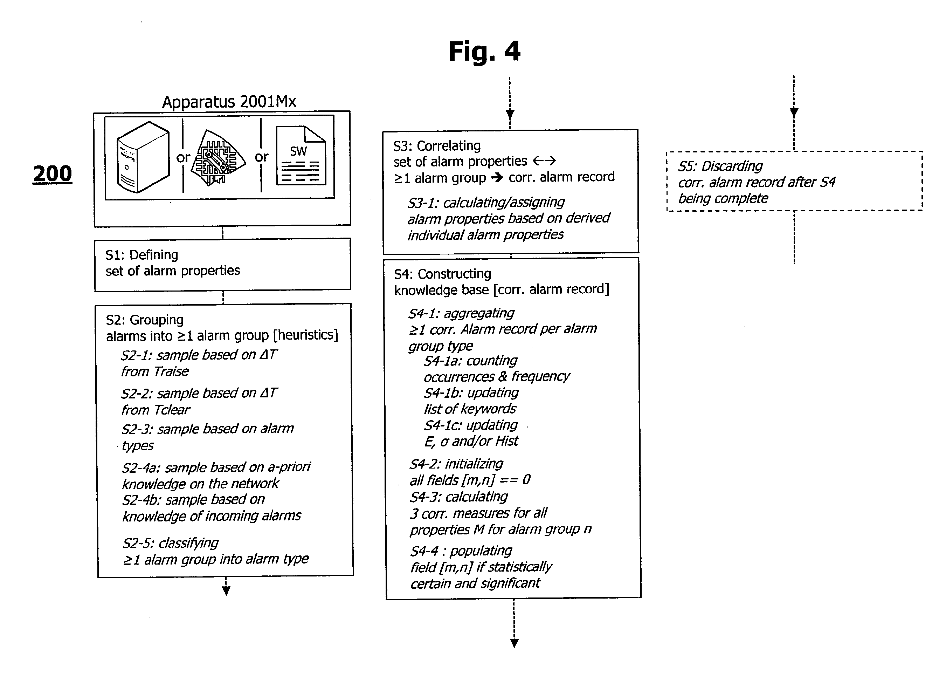

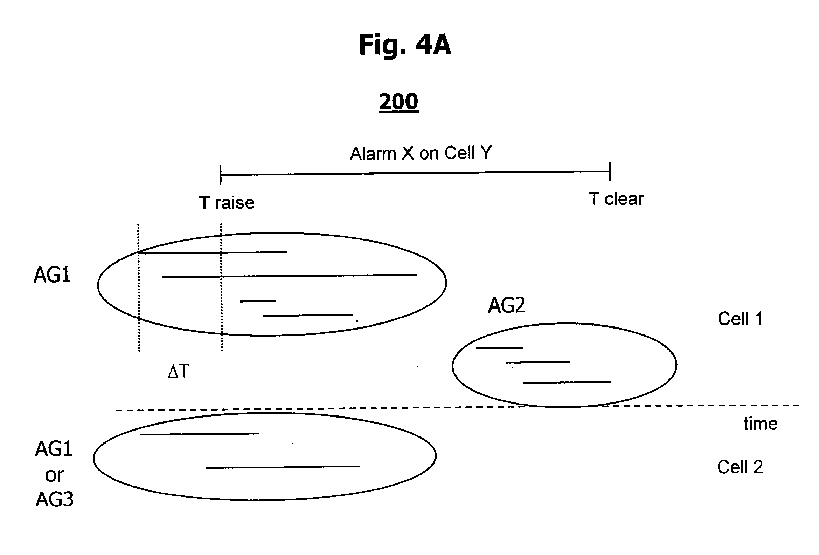

Fig. 4 shows a method embodiment which also reflects the interaction between the components of the device embodiment. In the signalling diagram of Fig. 4, time aspects between signalling are reflected in the vertical arrangement of the signalling sequence as well as in the sequence numbers. It is to be noted that the time aspects indicated in Fig. 4 do not necessarily restrict any one of the method steps shown to the step sequence outlined in Fig. 4. This applies in particular to method steps that are functionally disjunctive with each other. For instance, the optional discarding step 55 and the constructing step S4 are shown to take place in time one after another; however, this does not preclude that the steps are carried out e.g. with a greater time offset in-between them. Further, step S4 may be performed subsequent to step S3 or in parallel to that step.

In detail, in step S1, the definer 200x5 of the apparatus 2001Mx performs defining a set of alarm properties observable for at least one managed element of the communications network.

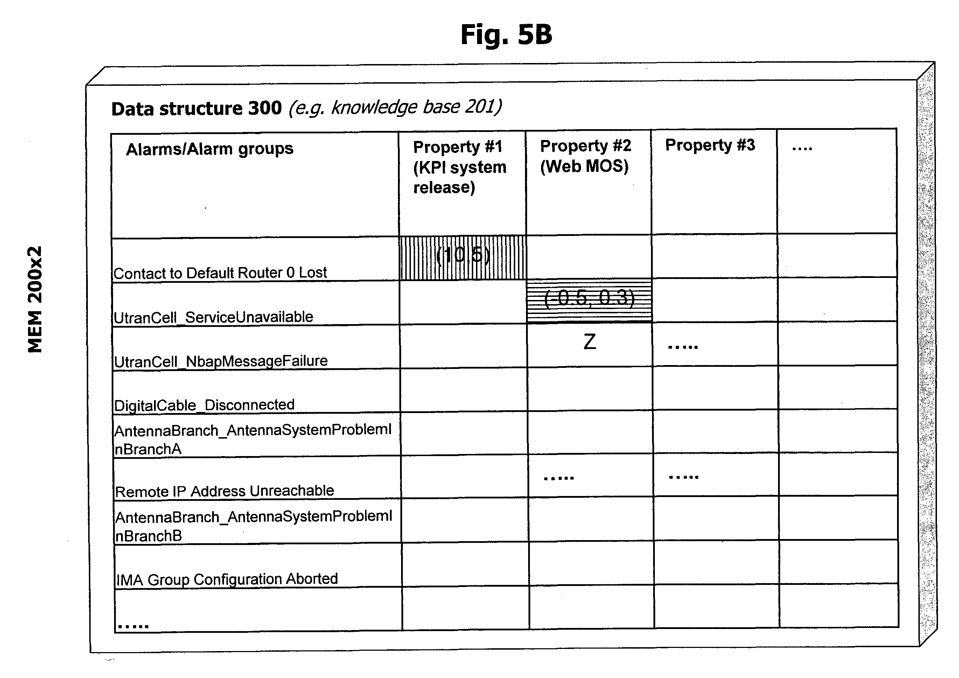

Wit reference to Fig. 5B and the subsequent description, for instance, such properties may e.g. be a Key Performance Indicator (KPI) system release, a Web Mean Opinion Score (MOS) etc.

Then, in step S2, the grouper 200x6 of the apparatus 2011Mx performs grouping incoming alarms into at least one alarm group based on heuristics.

Without loss of generality, the incoming alarms may be first put together into alarm groups, so that the alarms originating most probably from the same triggering occurrence are in the same group.

Preferably, the heuristics in the grouping step comprise at least one of the following sub-steps: in an optional step S2-1, incoming alarms are sampled, each of which has an alarm raise time point, into the at least one alarm group based on an elapsed time from the respective alarm raise time points. Alternatively, in an optional step S2-2, incoming alarms are sampled, each of which has an alarm clear time point, into the at least one alarm group based on an elapsed time from the respective alarm clear time points.

This is shown, as an example, in Fig. 4A which shows a first example for grouping of alarms. That is, the alarm grouping over time (e.g. for a given managed network element) may be done based on the raise times, by relating all alarms in which the alarm raise time is close to the raise time of the previous alarm (e.g. within a parameter ΔT time offset), resulting in an alarm group 1 (AG1). Analogously, the clear times may be used basically in the same manner, resulting in an alarm group 2 (AG2).

As another alternative, in an optional step S2-3, the incoming alarms may be sampled based on alarm types. Alternatively, in optional steps S2-4a and S2-4b, incoming alarms may be sampled based on a-priori knowledge of the communications network and relations of the managed element, or may be sampled based on a-priori knowledge of relations of the incoming alarms.

Without loss of generality, alarm grouping may happen on several planes. That is, alarms occurring and sustaining on the time axis closely to each other are potentially related (see also Fig. 4A). Alternatively, e.g. the topology of affected nodes, systems and subsystems also allow clustering of the alarms based on the same underlying managed element that they are related to.

The alarm knowledge base 201 may need to access the inventory of managed elements 200M, which might extend to the subsystems and configuration of managed elements, as well as, to the installed set of software. Further on, in order to learn dependence relation of network elements, the physical and logical topology of network nodes may be made available to the alarm knowledge base. Such information may include the physical link hierarchy between managed elements and the information routes of control and user plane communications, but the subsystem architecture and configuration of a site also carries relevant information to fault management. Without loss of generality, generic steps of alarm grouping may be summarized as follows
1. Optionally, a preliminary categorization of alarms may be performed and individual alarms may be categorized into a set of alarm categories with less cardinality.
   In that case, the types of alarms may allow further simplification in alarm pattern classification, so that alarms that are very similar in nature and impact can be treated as one type. Then, the number of potential alarm patterns is narrowed and more conclusive statistics can be obtained. Example: all kinds of different synchronization problem alarms are treated as one alarm type, such as "synchronization problem".
   Optionally, the time order of alarms in a group can be ignored, the short alarms can be filtered out before processing, and a group can be extended with a newly arriving alarm if the alarm is raised within a predefined delay ΔT after the last raise time and at least one of the alarms in the group not cleared yet (as shown in Fig. 4A). Note that alarm groups with a single element may exist.
2. Optionally, as a preliminary grouping, alarms of the same managed network element(s) 200M that are related to each other in the network topology may be pre-grouped.
   As is shown in Fig. 3A, there may be a generic relationship of a (mobile) network topology, as described above.
3. As an example, alarm groups may be formed from the set of alarms (that may be already pre-grouped by network elements in step 1) based on the elapsed time between alarm raise and/or clear times, as shown in Fig. 4A.
   That is, the time-wise connections of alarms are done as depicted in Fig. 4A. Alarms (that may come from the same network element if step 2 above is applied) are grouped together (AG1) if their raise time is close to each other, e.g. within a ΔT parameter. When two alarms are grouped together, a third one may join the group if the raise time is close enough in time to the raise time of the second alarm, etc.
   There can be variants of the grouping methodology other than time in, such as:
   - Whether the order of alarms within an alarm group is important or not;
   - Whether the short living dummy alarms (duration < dₘᵢₙ) are filtered out from grouping or not; and/or
   - Whether a new alarm can be added to a forming alarm group regardless of whether the previous alarms in the group have been cleared or not.

Optionally, in step S2-5, the grouping step may further comprise classifying the at least one alarm group into one group type.

The alarm groups may need to be classified into group types; for example, if two groups consist of the same set of alarms but with different arrival order of alarms, then the two groups may still be classified as belonging to the same alarm group type. Hereinbelow, a particular set of grouping algorithms and type classification is presented for this purpose.

Then, in step S3, the correlator 200x7 of the apparatus 200x1 performs correlating the set of alarm properties with the at least one alarm group to thus generate at least one correlated alarm record.

Without loss of generality, various information sources and measurements may be correlated with the particular alarm group to thus enrich the alarm group information with this data, which in turn yields the extended alarm group record. For example, such a record may contain values of KPIs, which are measured at the time of the given alarm group duration, or right before the start and right after the clearance of the alarms that are associated with the particular alarm group instance. A more detailed list of properties and the way of measuring these properties is presented herein below.

Optionally, as a next step, the extended alarm group record may be delivered to NOC applications or sent to the NOC staff directly.

Further optionally, in step S3-1, the correlating step may further comprise calculating and assigning alarm properties to the alarm group derived from the alarm properties of the individual alarms comprising the alarm group.

Finally, in step S4, the constructor 200x8 of the apparatus 2001Mx performs constructing the knowledge base 201 on the basis of the at least one correlated alarm record.

Without loss of generality, subsequent to step S3 or in parallel to that step, the extended alarm group record may stored and forwarded for updating the alarm knowledge base (AKB) 201. The alarm knowledge base 201 may consist of alarm knowledge base records (AKB records). In addition, the AKB record may also contain computed fields, which are related to the occurrences of alarms and alarm groups. A more detailed description of the alarm knowledge base is presented herein below.

Optionally, in step S4-1, the constructing step may further comprise aggregating the at least one correlated alarm record per alarm group type. Further optionally, the aggregating step may be based on one of the following: in sub-step S4-1a, in case of the property in question exhibiting nominal values, counting occurrences and frequency for each possible value, or in sub-step S4-1b, in case of the property in question being a textual field, continuously updating a list of keywords with their respective frequency; or in sub-step S4-1c, in case of the property in question exhibiting numeric values, continuously updating at least one of an average, a standard deviation and a corresponding histogram.

Without loss of generality, the alarm properties used to enrich alarms are mostly numerical values. The alarm resolution may be typically textual information. There may also be some nominal/category values as well, like alarm severity. These properties may be aggregated for a particular alarm group type into the alarm knowledge base record as seen in the above sub-steps S4-1a to S4-1c.

Optionally, the knowledge base may then be used to provide NOC applications and NOC staff with statistical and historical information on the properties that are associated with the particular alarm or alarm group under investigation. Hereinbelow, we describe NOC applications and procedures, which use the alarm knowledge base.

Finally, in an optional step S5, there may be performed discarding the at least one correlated alarm record after completion of the constructing step.

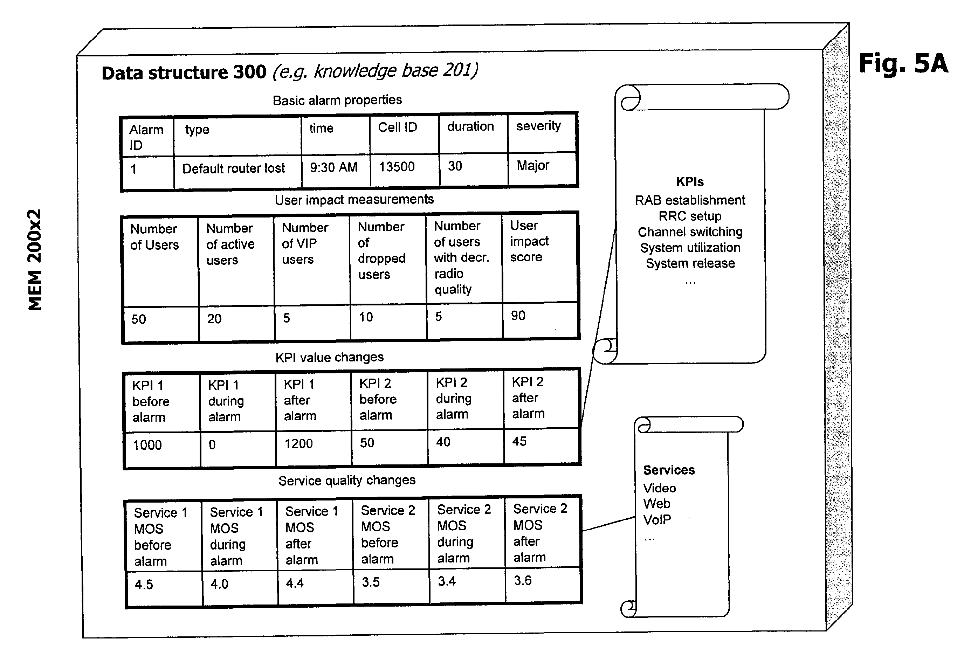

Fig. 5A shows a first example of a data structure embodiment. In particular, Fig. 5A shows a part of a data structure 300, which shows the extended alarm group record (which may result from the correlating step S3) as a data structure.

### Basic alarm knowledge base record fields

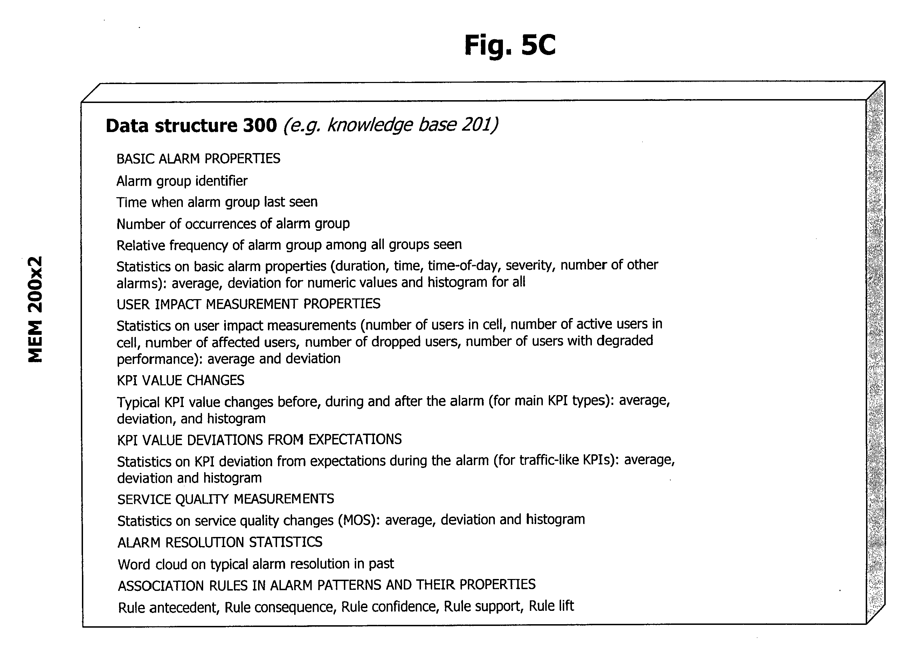

Optionally, the set of alarm properties may comprise basic alarm properties (shown at the top if Fig. 5A) and extended alarm properties (remaining part of Fig. 5).

Accordingly, on the one hand, there are the basic alarm properties that the alarm subsystem may provide together with the alarm trigger. Namely, the basic alarm properties may comprise at least one of the following properties for each incoming alarm: time of day and date; alarm types in the alarm group; severity of the alarm types; alarm group duration; one of nodes and cells having raised the alarm; and number of actual other alarms existing in an alarm subsystem during the particular alarm group.

On the other hand, in addition to these basic properties, measurements from other sources may be used for a deeper knowledge of alarm groups. That is, the extended alarm properties may comprise at least one of the following: immediate performance impact on at least one user due to the alarm group; a change in a Key Performance Indicator, KPI, value due to the alarm group; a deviation of a current KPI value from an expected KPI value due to the alarm group; a change in service performance due to the alarm group; missing measurements from the managed elements due to the alarm group; and alarm resolution information for the alarm group.

In other words, these measurements may include the immediate user impact of alarms, KPI values and KPI changes around the alarm, KPI deviations from expectations, impact on service performance for over-the-top services, which include web, video streaming, VoIP, etc. When it becomes available, the information on how the alarm is resolved at NOC may also be added as a property.

In the following the different extended alarm properties will be detailed.

### Immediate user impact

When an alarm group occurs at a node, the performance impact of the alarm(s) may be obtained from the node (cell) counters and events. As a non-limiting example, for WCDMA (Wideband Code Division Multiple Access) networks, the radio network events and counters may be used to log information on the cells, the number of attached users, the number of active users, the radio quality that the users see, the users who are dropped for some reason, such that the users can be identified by their unique IMSIs (International Mobile Subscriber Identities).

E.g. from the operator's user database, it is also possible to obtain the category of users, e.g. VIP users. Based on these input, the user impact for each alarm group may include the following properties:
- the number of users currently connected to the cell (or node),
- and among these users how many are active and/or how many are VIP users,
- how many of these users experience decreased radio quality or throughput,
- how many users are dropped, and/or
- how many users are forced to another network (i.e., from 3G to GSM, etc.) as a consequence of the alarm.

In addition to these details, a cumulative impact score may be computed from these measurements in order to obtain a compact estimation of the total alarm group impact.

### KPI value changes

In an operator's network, there may be a number of KPIs indicating how the network is behaving. A KPI could relate to a single network node (e.g. a cell or a base station), to a group of nodes (e.g. all nodes in a city), or to the whole network.

A KPI may also relate to a given time period, which usually the term ROP (report output period) is used for. The length of ROP also varies for different events and counters, the range could vary from milliseconds to hours.

As a non-limiting example, in a WCDMA mobile network, there may be a number of cell level events to indicate what is happening in the cell. There are WCDMA network measurements and events which occur in great numbers, hence they are suitable for immediate analysis of alarm impact:
- RRC setup (Setup of Radio Resource Control),
- RAB establishment (Radio Access Bearer Setup),
- channel switching (Channel Switching),
- system utilization (Utilization of the system resources), and/or
- system release (System releases).

Based on these cell level events, KPIs can be computed per cell and ROP, and then used as indicators of cell performance. For example, a KPI could be the number of events in a ROP (e.g. number of system releases in a cell in 15 minutes), or could be the success rate of an event (e.g. success rate for RAB establishment in 15 minutes).

When an alarm group occurs in a cell, then the potential impact of the alarm group on different KPIs may be monitored, and the KPI value may be analyzed before, during and after the alarm group and any change may be monitored. For a single alarm group instance, the impact may be measured for each KPI type above and included in the extended alarm group record. For example, for alarm group X, the RAB establishment success rate is at 99% before alarm raise, 50% during alarm state, and back to 98% after the alarms in the group are all cleared.

### KPI deviations from expectation

The variations of certain KPIs, which describe the operation of individual managed elements, follow stable daily trends. These trends can be different for weekdays and weekends.

Thus, the KPI values may be continuously monitored for the network elements (for example, base stations and/or cells) and the typical behavior of KPIs may be described by dynamically updated statistical models. When an alarm occurs, the expected (learnt) KPI value of the associated network element may be looked up and may be compared to the current (actual) KPI value. If the difference is significant, this information is also used to enrich the alarm with a new property:
- an indication of deviation from expected KPI, and/or
- the magnitude of deviation.

Those properties may be attached to the alarm group record. The applied KPI types in this step may be traffic related robust statistics:
- number of different users appearing in the cell/network element, and/or
- amount of certain traffic in the cell/network element.

These KPI types may be suitable for detecting any deterioration from expected KPI values, either to the negative (e.g. missing traffic due to node failure) or positive direction (e.g. flash crowd, special gathering causing overload problems).

### Service performance changes

Optionally, in the case of change in service performance due to the alarm group, the following may be performed: detecting an alarm property based on detecting the change in service performance; identifying at least one service at the managed element having raised the alarm; and recording any change in the observed quality.

Without loss of generality, operators are interested in monitoring the service performances of the over-the-top services to provide better customer experiences. E.g. by means of a Deep Packet Inspection (DPI) probe, a network operator is capable of analyzing the user traffic passing through their network. By analyzing the traffic, the mean opinion score (MOS) value may be estimated for different end-user services. For example, by studying Hyper Text Transfer Protocol (HTTP) request and response packets, the page load time (PLT) for a web session may be derived, and thereafter, an estimate MOS for this session is given based on the normal (average) PLT for this type of web page.

MOS values may be collected for the following services:
- Web browsing, where MOS is based on PLT, and/or
- Video stream traffic, where MOS score of video session is based on the bit rate, re-buffering events, video size, etc.

When an alarm group occurs at a node, the services with traffic passing through the alarmed nodes may be identified, and any change in the observed service quality (in MOS) is attached to the extended alarm group record.

### Missing measurements from managed elements

There may be situations when a managed element does not signal any alarms, yet the expected measurements from the managed element are missing, and thus the KPIs cannot be calculated for the particular network node. These occasions of missing measurements may be noticed and logged. The extent of alarms occurring upper in network hierarchy can be evaluated based on the missing data.

### Alarm resolution information

The resolution information as free text, executable scripts, or process descriptions in meta language is also included in the extended alarm group record whenever it becomes available.

### Extended alarm group record

To sum up, the above listed properties may form the extended alarm group record. An example alarm group record structure is shown in Fig. 5A. First, there are basic properties for this alarm group instance. Next, information from other sources, alarm user impact measurement, KPI value changes, and service performance changes are shown.

The construction of extended alarm group records may be performed close to real-time. When an alarm group occurs, the algorithm may scan for measurements from other sources and may relate those to this alarm group. After collecting these statistics, an extended alarm group record is created; this record may be viewable for network operator staff when handling alarms and the record may also be stored into the database to update the continuously developing alarm knowledge base. Alarm resolution information may be added later in time when it becomes available.

Fig. 5B shows a second example of a data structure embodiment. Fig. 5B shows an illustration of the alarm knowledge base. The alarm knowledge base consists of records, so the alarm knowledge base is a table, where each row corresponds to an alarm group type and each column corresponds to an aggregated alarm group property.

In detail, there is provided a data structure 300 for of the knowledge base 201 for alarm management in the communications network 200. The data structure comprises N rows for N alarm group AG types (here, 8 rows are shown) grouped from incoming alarms; and at least one column per each of M properties observable for at least one managed element 200M1, 200M2, 200M3, 200M4 of the communications network (here, 2 properties are shown, each of which have at least mean value and standard deviation of the property).This results in at least M*N fields, wherein all fields are initialized to 0; a field [m,n] of the data structure is assigned a non-zero value if and only if three correlation measures of an m-th alarm group and an n-th property deviate, with both statistical certainty and by a statistically significant amount, from one another, wherein, for all M properties, the three correlation measures for the n-th alarm group before, during and after occurrence of an incoming alarm belonging to the n-th alarm group have been calculated.

To sum up, without loss of generality, based on the extended alarm record, the alarm knowledge base may be constructed. Rather than focusing on individual alarm group instances, the alarm knowledge base may aggregate the extended alarm records per alarm group type. Therefore, certain types of aggregation methods (e.g. autoregressive-moving-average models) may be used to build the knowledge base from the individual extended alarm records. The alarm knowledge base may not need to store individual alarm group records for long times. Rather, averages, standard deviations may be calculated and histograms for numerical characterization of alarm group types may be maintained on the fly.

As a use example shown in Fig. 5B, the following may be envisaged: for the KPI change property set in the alarm knowledge base record, there is a binary indication of each cell in the alarm knowledge base table to show if the alarm group type has an impact on this property. First, all instances of this alarm group type are identified. Then the property value before, during, and after alarm are analyzed, and the average and standard deviation of the value difference are computed. If the cell is hatched horizontally or vertically, it suggests that some impact has been identified with some statistical certainty. Horizontal hatching shows the increase of the property value, while vertical hatching shows the decrease of the property value.

The horizontally hatched cell for alarm "Contact to default router 0 lost" and property #1 (KPI system release) suggests this alarm type in average increases by 10 system releases e.g. per ROP and that the standard deviation of this increase is 5. Conversely, the vertically hatched cell for alarm group "UtranCell_ServiceUnavailable" and property #2 (Web MOS) suggests that this alarm type in average decreases the MOS of the web service by 0.5, and the standard deviation of the decrease is 0.3.

Finally, if an alarm type has not significant and statistically certain impact on a given property, no values are shown in the alarm knowledge base.

### Values related to association rules

For alarm groups with more than one member alarms, it is possible to search for any association rule between the members of the alarm group.

The association rule may be computed with among the possible association rules within an alarm group and may add the following values regularly for each alarm group in the alarm knowledge base:
- Rule antecedent
- Rule consequence
- Rule confidence
- Rule support
- Rule lift

Fig. 5C shows a third example of a data structure. In particular, Fig. 5C shows the fields of the alarm knowledge base record in detail. The alarm knowledge base record may consist of three parts: 1) basic fields, 2) aggregate values of individual alarm group properties and 3) values related to association rules between alarms.

The update of certain parts of the alarm knowledge base can be an offline task. Newly arriving alarm group records may improve the statistical accuracy of the information stored in the knowledge base and, at the same time, can drift the knowledge base models according to recent trends. On the other hand, the aggregated properties obtained by association rules between alarms have to be recomputed only regularly, therefore some kind of daily or hourly re-construction period may be used for the alarm knowledge base.

### Alarm knowledge base applications

Finally, in the following, some practical use cases of the knowledge base 201 according to the present disclosure are described. Thus, in this section, some applications are described that rely on the alarm knowledge base 201 and efficiently improve the alarm management tasks.

These applications may rely on different parts of the knowledge base. The prediction use case may utilizes the association rules that are computed for alarm groups, while certain prioritization use cases may utilize the attached and aggregated alarm group properties for decision support. Some other applications just use the general statistics, while the grouping itself can also be utilized among applications.

### Prioritization and filtering of alarms

When an alarm or a group of alarm is incoming, the alarm knowledge base may be looked up whether the given alarm group typically had measurable network impact in the past cases or not. The impact may then be measured through the properties that are attached to the alarm group during the enrichment phase. If the alarm knowledge base indicates a potentially significant negative effect on some impact dimension, the given alarm group may get high priority, otherwise not.

In a practical implementation of an alarm/alarm group prioritization system in automated network management, there may be a number of priority levels (1,2, ..., n) defined, where priority level 1 classifies the alarm(s) as the most urgent while priority level n classifies the alarm(s) as least important to be solved quickly.

Thus, the present disclosure enables an automated prioritization mechanism for incoming alarms/alarm groups based on the collected alarm knowledge base. When an alarm or alarm group is detected, the historical average properties P1, P2, P3 (e.g. P1 = ratio of cases with significant immediate user impact, P2 = ratio of cases with negative impact on network KPIs, and P3 = ratio of cases when IWS signal was detected during the alarms in the past) and the average length L of the alarm duration in the past may be looked up in the alarm knowledge base. Based on this knowledge of historical values P1, P2, P3 and L, the alarm/alarm group may be classified automatically into 8 alarm priority levels as follows:
- Priority is set to 1, if all measures P1, P2, P3 are larger than a predefined threshold of 0.5.
- Priority is set to 2, if exactly two measures from P1, P2, P3 are larger than a predefined threshold of 0.5.
- Priority is set to 3, if exactly one measure from P1, P2, P3 is larger than a predefined threshold of 0.5.
- Priority is set to 4, if any of the measures from P1, P2, P3 are larger than a predefined threshold of 0.3 and conditions for Priority 1, 2 or 3 are not met.
- Priority is set to 5, if any of the measures from P1, P2, P3 are larger than a predefined threshold of 0.2 and conditions for Priority 1, 2, 3 or 4 are not met.
- Priority is set to 6, if the average alarm duration L in the past is larger than a predefined threshold of 10 minutes and conditions for Priority 1, 2, 3, 4 or 5 are not met.
- Priority is set to 7, if the average alarm duration L in the past is larger than a predefined threshold of 5 minutes and conditions for Priority 1, 2, 3, 4, 5 or 6 are not met.
- Otherwise, priority is set to 8.

### Re-prioritization of alarms based on KPIs

In a managed service scenario, a third-party company may offer to manage a network for network owners. Typically, the managed service is controlled by a service level agreement (SLA) based on network and service KPIs. Some example SLA could be:
- The network up time should be above 99.999%;
- The RAB establishment success rate should be above 99%; and/or
- The web browsing service performance should have an average MOS above 3.5.

The basic idea of this use case resides in re-prioritizing alarms based on SLA of KPIs. When a KPI is at a critical point close to violating the service level agreement (SLA), a KPI warning may be issued. Then, the system may identify the relevant alarms in the KPI warning cell, and by querying the alarm knowledgebase, the alarms that usually have a large impact on this KPI may be identified.

The priority for these existing alarms may be increased. With increased alarm priority, alarms impacting important KPIs may be handled earlier, thus reducing potential violation of SLA on KPIs.

### Alarm prediction-preventive actions

Certain alarms or alarm combinations, e.g. loss of mains in a subsystem, or cable problems, may impact severely the service of a node without leading to immediate high-priority warning from the node itself. The alarm knowledge base can identify these cases e.g. based on the history of similar alarm patterns, and it can either inform network supervisors about the typical resolution of the alarm situation or, in well-defined cases, it can trigger preventive actions. This way the major failures can be avoided in many cases.

### Group-alarm handling

Alarms, which have an identified common root cause, should be handled together and they may be displayed as a single entity for network supervision. The state of the art alarm rule engines today can only group obviously related alarms, e.g. repetition of same alarms and alarms from the same managed entity.

However, alarm relations can be more complex, affecting several network elements at a time, and can have a variety in patterns such that those patterns still describe the same failure phenomenon. Grouping of these alarms also enable to put them into the same trouble ticket (TT) during the alarm resolution process.

### Development of self-healing processes to resolve alarms

There are repetitive manual steps in alarm handling, especially, if an alarm or alarm group impact several managed network elements. There are already some simple, automatic alarm resolution techniques in practice for single alarms, such as automatically requesting extended report from the managed element that issued the alarm or automatic rebooting the node or its subsystem, but these techniques are not able to utilize the higher-layer relations of managed elements and they do not realize the correlations of alarms on different nodes.

In case an alarm belongs to an alarm group and that group is already classified with an identified root cause, moreover, the procedure can be automatized such that the core procedure is also included in the alarm knowledge base, and only the relevant parameters, e.g. the identifications of the affected network nodes, are filled in the processing steps, which are then can be executed on the affected nodes.

### Database for typical failures and alarms for specify equipment, system and configurations

For most products, which are sold in great numbers and versions in the market, certain failures, warnings and errors might occur more frequently to some models, versions or configurations of the product. Network equipment manufacturers may also need such statistics in order to improve their future products and make the already deployed equipment more reliable. The alarm knowledge base may collect and provide the necessary statistics for network manufacturers and operation/supervision centers.

### Alarm resolution action proposal

The resolution of an alarm/group of alarms is one of the most critical tasks. The knowledge base may contain detailed information on the typical duration of alarms as well as on the main types of actions that led to successful resolution in the past.

This can depend as well on many other issues such as network element type or time of day when alarm occurred, but that is embedded in the knowledge base structure. In many cases, the alarms may be automatically cleared in a few minutes, so that information can be used to delay reaction in case of certain "dummy" types of alarms. In other cases, the structured summary of the actual resolution information learning from the past can give guidance for the actual case.

The present disclosure provides one or more of the following advantages:
- Automatic identification of relevant alarm properties is enabled, which can be used to assist and speed up the processing of alarms in NOCs.
- Alleviating the need for human based "training" of the system, such as, for example, an expert or NOC personnel filing in the knowledge base manually. Rather, the knowledge base is automatically built and updated based on the actual alarm inflow.
- Enabling learning of alarm properties that are specific to a particular network. With the proposed automatic mechanism, properties can be learnt that would be impossible to obtain with manual processing, which in turn deepens knowledge of alarm situations and enables new use cases in efficient alarm management.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for creating a knowledge base (201) for alarm management in a communications network (200), comprising the steps of:
defining (S1) a set of alarm properties observable for at least one managed element (200M1, 200M2, 200M3, 200M4) of the communications network;
grouping (S2) incoming alarms into at least one alarm group (AG) based on heuristics;
correlating (S3) the set of alarm properties with the at least one alarm group to thus generate at least one correlated alarm record; and
constructing (54) the knowledge base on the basis of the at least one correlated alarm record.

2. The method of claim 1, wherein the heuristics in the grouping step comprise at least one of:
sampling (S2-1) incoming alarms, each of which has an alarm raise time point, into the at least one alarm group based on an elapsed time from the respective alarm raise time points;
sampling (S2-2) incoming alarms, each of which has an alarm clear time point, into the at least one alarm group based on an elapsed time from the respective alarm clear time points;
sampling (S2-3) incoming alarms based on alarm types;
sampling (52-4a) incoming alarms based on a-priori knowledge of the communications network and relations of the managed element; and
sampling (52-4b) incoming alarms based on a-priori knowledge of relations of the incoming alarms.

3. The method of claim 1 or 2, wherein the grouping step further comprises:
classifying (52-5) the at least one alarm group into one group type.

4. The method of any one of claims 1 to 3, wherein a-priori knowledge comprises learnt dependences in the topology of the communications network.

5. The method of claim 4, wherein the learnt dependences are based on a physical link hierarchy between the managed elements and on information routes of communication traffic.

6. The method of any one of claims 1 to 5, wherein the set of alarm properties comprises:
basic alarm properties; and
extended alarm properties.

7. The method of claim 6, wherein the basic alarm properties comprise at least one of the following properties for each incoming alarm:
- time of day and date;
- alarm types in the alarm group;
- severity of the alarm types;
- alarm group duration;
- one of nodes and cells having raised the alarm; and
- number of actual other alarms existing in an alarm subsystem during the particular alarm group.

8. The method of claim 6 or 7, wherein the extended alarm properties comprise at least one of the following:
- immediate performance impact on at least one user due to the alarm group;
- a change in a Key Performance Indicator, KPI, value due to the alarm group;
- a deviation of a current KPI value from an expected KPI value due to the alarm group;
- a change in service performance due to the alarm group;
- missing measurements from the managed elements due to the alarm group; and
- alarm resolution information for the alarm group.

9. The method of claim 8, further comprising in the case of change in service performance due to the alarm group:
detecting an alarm property based on detecting the change in service performance;
identifying at least one service at the managed element having raised the alarm; and
recording any change in the observed quality.

10. The method of any one of claims 1 to 9, wherein the correlating step further comprises:
calculating and assigning (S3-1) alarm properties to the alarm group derived from the alarm properties of the individual alarms comprising the alarm group.

11. The method of any one of claims 1 to 10, wherein the constructing step further comprises:
aggregating (S4-1) the at least one correlated alarm record per alarm group type.

12. The method of claim 11, wherein the aggregating step is based on one of the following:
- in case of the property in question exhibiting nominal values, counting (S4-1a) occurrences and frequency for each possible value;
- in case of the property in question being a textual field, continuously updating (S4-1b) a list of keywords with their respective frequency; or
- in case of the property in question exhibiting numeric values, continuously updating (S4-1c) at least one of an average, a standard deviation and a corresponding histogram.

13. The method of any one of claims 1 to 12, wherein the knowledge base has N rows for N alarm group types and at least one column per each of M properties resulting in at least M*N fields, and wherein the constructing step further comprises:
initializing (S4-2) all fields to 0;
calculating (S4-3), for all M properties, three correlation measures for the n-th alarm group before, during and after the occurrence of an incoming alarm belonging to the n-th alarm group, and
populating (54-4) the knowledge base so that a field [m,n] of the knowledge base is assigned a non-zero value if and only if the three correlation measures of the m-th alarm group and the n-th property deviate, with both statistical certainty and by a statistically significant amount, from one another.

14. A computer program product comprising program code portions for performing the method of any one of the preceding claims when the computer program product is executed on one or more computing devices, preferably stored on a computer readable recording medium.

15. An apparatus (2001) for creating a knowledge base (201) for alarm management in a communications network (200), the apparatus comprising a processor (20011) configured to:
- define a set of alarm properties observable for at least one managed element (200M1, 200M2, 200M3, 200M4) of the communications network;
- group incoming alarms into at least one alarm group (AG) incoming alarms;
- correlate the set of alarm properties with the at least one alarm group to thus generate at least one correlated alarm record; and
- construct the knowledge base on the basis of the at least one correlated alarm record.

## Amended claims

### Amended claims in accordance with Rule 137(2) EPC.

1. A method for creating a knowledge base (201) for alarm management in a communications network (200), comprising the steps of:
defining (S1) a set of alarm properties observable for at least one managed element (200M1, 200M2, 200M3, 200M4) of the communications network;
grouping (S2) incoming alarms into at least one alarm group (AG) based on heuristics;
correlating (S3) the set of alarm properties with the at least one alarm group to thus generate at least one correlated alarm record; and
constructing (S4) the knowledge base on the basis of the at least one correlated alarm record.

2. The method of claim 1, wherein the heuristics in the grouping step comprise at least one of:
sampling (S2-1) incoming alarms, each of which has an alarm raise time point, into the at least one alarm group based on an elapsed time from the respective alarm raise time points;
sampling (S2-2) incoming alarms, each of which has an alarm clear time point, into the at least one alarm group based on an elapsed time from the respective alarm clear time points;
sampling (S2-3) incoming alarms based on alarm types;
sampling (S2-4a) incoming alarms based on a-priori knowledge of the communications network and relations of the managed element; and
sampling (S2-4b) incoming alarms based on a-priori knowledge of relations of the incoming alarms.

3. The method of claim 1 or 2, wherein the grouping step further comprises:
classifying (S2-5) the at least one alarm group into one group type.

4. The method of claim 2, wherein the a-priori knowledge comprises learnt dependences in the topology of the communications network.

5. The method of claim 4, wherein the learnt dependences are based on a physical link hierarchy between the managed elements and on information routes of communication traffic.

6. The method of any one of claims 1 to 5, wherein the set of alarm properties comprises:
basic alarm properties; and
extended alarm properties.

7. The method of claim 6, wherein the basic alarm properties comprise at least one of the following properties for each incoming alarm:
- time of day and date;
- alarm types in the alarm group;
- severity of the alarm types;
- alarm group duration;
- one of nodes and cells having raised the alarm; and
- number of actual other alarms existing in an alarm subsystem during the particular alarm group.

8. The method of claim 6 or 7, wherein the extended alarm properties comprise at least one of the following:
- immediate performance impact on at least one user due to the alarm group;
- a change in a Key Performance Indicator, KPI, value due to the alarm group;
- a deviation of a current KPI value from an expected KPI value due to the alarm group;
- a change in service performance due to the alarm group;
- missing measurements from the managed elements due to the alarm group;
and
- alarm resolution information for the alarm group.

9. The method of claim 8, further comprising in the case of change in service performance due to the alarm group:
detecting an alarm property based on detecting the change in service performance;
identifying at least one service at the managed element having raised the alarm; and
recording any change in the observed quality.

10. The method of any one of claims 1 to 9, wherein the correlating step further comprises:
calculating and assigning (S3-1) alarm properties to the alarm group derived from the alarm properties of the individual alarms comprising the alarm group.

11. The method of any one of claims 1 to 10, wherein the constructing step further comprises:
aggregating (S4-1) the at least one correlated alarm record per alarm group type.

12. The method of claim 11, wherein the aggregating step is based on one of the following:
- in case of the property in question exhibiting nominal values, counting (S4-1a) occurrences and frequency for each possible value;
- in case of the property in question being a textual field, continuously updating (S4-1b) a list of keywords with their respective frequency; or
- in case of the property in question exhibiting numeric values, continuously updating (S4-1c) at least one of an average, a standard deviation and a corresponding histogram.

13. The method of any one of claims 1 to 12, wherein the knowledge base has N rows for N alarm group types and at least one column per each of M properties resulting in at least M*N fields, and wherein the constructing step further comprises:
initializing (S4-2) all fields to 0;
calculating (S4-3), for all M properties, three correlation measures for the n-th alarm group before, during and after the occurrence of an incoming alarm belonging to the n-th alarm group, and
populating (S4-4) the knowledge base so that a field [m,n] of the knowledge base is assigned a non-zero value if and only if the three correlation measures of the m-th alarm group and the n-th property deviate, with both statistical certainty and by a statistically significant amount, from one another.

14. A computer program product comprising program code portions for performing the method of any one of the preceding claims when the computer program product is executed on one or more computing devices, preferably stored on a computer readable recording medium.

15. An apparatus (2001) for creating a knowledge base (201) for alarm management in a communications network (200), the apparatus comprising a processor (20011) configured to:
- define a set of alarm properties observable for at least one managed element (200M1, 200M2, 200M3, 200M4) of the communications network;
- group incoming alarms into at least one alarm group (AG) based on heuristics;
- correlate the set of alarm properties with the at least one alarm group to thus generate at least one correlated alarm record; and
- construct the knowledge base on the basis of the at least one correlated alarm record.
